# EUROPÄISCHE PATENTSCHRIFT

(11) **EP 2 184 139 B1**
(45) Veröffentlichungstag und Bekanntmachung des Hinweises auf die Patenterteilung: **30.03.2011**
(21) Anmeldenummer: 09175601.5
(22) Anmeldetag: 10.11.2009
(51) Int. Cl.: B25J 19/00, B23K 26/08

(54) **Vorrichtung zur hochdynamischen 3-D-Bearbeitung eines Werkstückes mit Laserstrahl**
Device for highly dynamic 3D machining of a workpiece with laser beam
Dispositif de traitement en 3D hautement dynamique d'une pièce usinée à l'aide d'un rayon laser

(30) Priorität: 10.11.2008 DE 102008056712
(43) Veröffentlichungstag der Anmeldung: 12.05.2010
(73) Patentinhaber: JENOPTIK Automatisierungstechnik GmbH, 07745 Jena (DE)
(72) Erfinder: Jancsó, Alex, 07749 Jena (DE); Döring, Thomas, 07751 Sulza (DE); Bergmann, Jean Pierre, 99096 Erfurt (DE); Patschger, Andreas, 07749 Jena (DE); Nittner, Michael, 07774 Camburg (DE)
(74) Vertreter: Schaller, Renate

(56) Entgegenhaltungen:
- FR-A1- 2 847 187
- US-A- 5 034 618
- US-A1- 2005 150 876

## Beschreibung

Die Erfindung betrifft eine Vorrichtung, bei der ein durch ein Lichtleitkabel übertragener Laserstrahl von einem Gelenkarm eines Roboters zu einem zu bearbeitenden Werkstück geführt wird.

Das dreidimensionale Bearbeiten von Bauteilen (nachfolgen Werkstück genannt) gewinnt in der Fertigung, insbesondere beim Schweißen von endkonturnahen Bauteilen oder beim Trimmen und Besäumen von Bauteilen nach einem Umformvorgang an Bedeutung.

Insbesondere, wenn die hierbei mit einem Laserstrahl zu bearbeitenden flächen bzw. Konturen des Werkstückes nicht innerhalb einer Ebene liegen (nachfolgend 3-D-Konturen genannt), bietet der Einsatz von Knickarm-Robotern aufgrund der freien Programmierbarkeit deren Bewegungsablaufes eine hohe Gestaltungsfreiheit bei niedrigeren Investitionskosten und akzeptabler Fertigungsgenauigkeit.

Das Bearbeiten von 3-D-Konturen eines Werkstückes mittels Knickarm-Roboter und Laserstrahl wird im Leistungsbereich über 1 kW vordergründlich durch Festkörperlaser (YAG, Diode oder Faserlaser) durchgeführt. Laserstrahlen dieser Laserart können vorteilhaft durch ein Lichtleitkabel, bestehend aus einer oder mehreren Lichtleitfasern, auch über mehrere Meter geführt werden, wodurch sich in naheliegender Weise die Möglichkeit eröffnen, den Laserstrahl über ein Lichtleitkabel bis zur Roboterhand, in der eine Bearbeitungsoptik zur Fokussierung des Laserstrahles auf das Werkstück vorhanden ist, extern am Roboterarm zu führen.

Unabhängig davon, ob die von einer Laserquelle kommende Laserstrahlung über nur eine Lichtleitfaser oder eine Vielzahl von im Lichtleitkabel .zusammengefassten Lichtleitfasern geleitet wird, soll sie nachfolgend als ein Laserstrahl mit einer Strahlachse verstanden werden.

Aus der deutschen Patentschrift DE 43 35 367 C2 ist eine Roboterhand für die 3-D-Bearbeitung von Werkstücken bekannt. An einer Handachse, welche die vierte Achse eines Fünfachs-Roboters darstellt, soll ein Anschluss für einen am Lichtleitkabel vorhandenen Stecker vorgesehen sein. Der Anschluss soll als ein Steck- oder ein Schraubverbinder ausgeführt sein.

Um das Lichtleitkabel gegen mechanische Überlastung zu schützen, soll es z. B. durch eine Spiralummantelung geschützt sein. In dem Stecker soll eine optische Linsenanordnung integriert sein, mit der der Laserstrahl in bekannter Weise kollimiert wird. Es wird darauf hingewiesen, dass die optische Linsenanordnung zur Kollimation auch eine außerhalb der faserseitigen Steckverbindung, also außerhalb des Steckers angeordnete separate Baugruppe sein kann.

Es ist dem Fachmann klar, dass bei einer derartigen Einkopplung des Laserstrahls in die Hand eines Roboters die Strahlachse der Laserstrahls, der über die Lichtleitfasern des Lichtleitkabels geführt wird, und die optische Achse der Bearbeitungsoptik der Roboterhand nicht zusammenfallen, sondern abhängig von den Montagetoleranzen der Steckverbindung zueinander versetzt und verkippt sind.

Da jedoch der Laserstrahl nur eine verhältnismäßig kurze Strecke innerhalb des Roboterarms zurücklegt, das heißt der Strahlungsweg zwischen dem Faserende und der Bearbeitungsoptik kurz ist, ist der Auftreffpunkt der Strahlachse des Laserstrahls auf der Bearbeitungsoptik noch hinreichend nahe dem Durchstoßpunkt der optischen Achse, sodass auch keine Abschattung des Laserstrahls innerhalb dieses Strahlweges in der Roboterhand erfolgt.

Nachteilig an dieser Art der Zuführung des Laserstrahls zur Bearbeitungsoptik, über welche der Laserstrahl auf das Werkstück fokussiert wird, ist jedoch, dass das Lichtleitkabel, den Bewegungen des Roboterarms folgend, permanent mechanisch belastet wird, auch wenn es nicht den hochdynamischen Bewegungen der Handachse folgen muss. Durch die Ummantelung soll diese Belastung zwar gedämpft werden, jedoch schränkt die Ummantelung auch die Beweglichkeit der Lichtleitfasern ein.

In der Regel dürfen die Lichtleitfasern nicht mit einem Biegeradius kleiner 150 mm gebogen werden, weshalb es beim Abfahren von stark konturierten Werkstücken mit der Roboterhand zur Faserbeschädigung durch Knicken kommen kann. Darüber hinaus weisen Lichtleitkabel eine erhöhte Empfindlichkeit gegenüber unkontrollierten Rückschlägen bei Bewegungen mit hoher Dynamik auf.

Im Fall der Beschädigung der Lichtleitfasern muss in der Regel das Lichtleitkabel, ersetzt werden, was Kosten und Ausfallzeit verursacht. Man muss hier beachten, dass der Abstand zwischen dem Bearbeitungsort und der Laserquelle bis zu mehreren Metern betragen kann, z. B. 50 m, so dass das Ersetzen des Lichtleitkabels, auch wenn dieses mit einem Schnellkoppelverschluss versehen ist, durchaus zeitintensiv ist.

In der europäischen Patentschrift EP 1 579 962 B1 ist ein Roboter zum Ausführen von industriellen Arbeiten mittels Laserstrahl bekannt, bei dem der Laserstrahl durch eine im Inneren des Gelenkarmes des Roboters angeordnete optische Lichtleitfaser geleitet wird.

Eine solche integrierte Führung der Lichtleitfaser ist aufgrund der Empfindlichkeit und des geringen Biegeradius (100-200 mm) für hochdynamische Roboter nicht geeignet.

In beiden genannten Lösungen des Standes der Technik wird das Lichtleitkabel mit dem Roboterarm mitbewegt und somit dynamisch belastet, was dessen Lebensdauer verringert. Es stellt das schwächste Glied im Strahlengang dar und gilt als Verschleißteil.

Lichtleitfasern können zum Transport eines eingespeisten Laserstrahls dienen oder auch selbst als Laser, sprich Faserlaser arbeiten.

Ein Faserlaser besteht aus einer aktiven Faser, z. B. aus einer mit Ytterbium oder Erbium dotierten Glasfaser, die über eine stoffschlüssige Verbindung mit einer Transportfaser verbunden ist. Da die Länge der aktiven Faser aufgrund des Auftretens von unerwünschten Nebeneffekten begrenzt ist, wird grundsätzlich über die Wahl der Länge der Transportfaser die Gesamtlänge des Lichtleitkabels bestimmt, um den Laserstrahl zum Ort des Einkoppeln in einen Strahlengang bzw. zu seinem Wirkungsort zu leiten. Die aktive Faser und die Transportfaser stellen einen nahezu monolithischen Aufbau dar, sodass bei einer Beschädigung der Transportfaser und dem daraus folgenden Austausch der Transportfaser die stoffschlüssige Verbindung zur aktiven Faser von Grund auf erneuert werden muss. Um eine mechanische Belastung der Transportfaser zu vermeiden, wird diese in der Praxis mit einer Prozessfaser verbunden, und die Bewegung des Lichtleitkabels, welches dann aus den Abschnitten aktive Faser, Transportfaser und Prozessfaser gebildet wird, wird auf den Bereich der Prozessfaser beschränkt.

Die Prozessfaser ist eine konfektionierte Faser, die über eine Faser-faser-Kopplung, die eine Steck- oder Schraubverbindung sein kann, einfach ausgetauscht werden kann. Die Faser-Faser-Kopplung führt jedoch zu einer erheblichen Verschlechterung der Strahlqualität, die mit einer Erhöhung auch des Strahldurchmessers verbunden ist. Dies sei anhand eines Beispiels erklärt:
Die Transportfaser hat beispielsweise einen Durchmesser von 50 µm und wird aufgrund unvermeidbarer Justagefehler und -toleranzen in der Faser-Faser-Kopplung an eine Prozessfaser mit größerem Durchmesser, z. B. von 100 µm, gekoppelt. Mit der Verdopplung des Durchmessers ergibt sich eine vierfach niedrigere Strahldichte über den Strahlquerschnitt beim Auftreffen auf dem Werkstück, was zu einer Verringerung der Bearbeitungsgeschwindigkeit und damit Erhöhung der Taktzeit führt. Die Gesamteffizienz des Bearbeitungsprozesses nimmt ab.

Es wäre daher wünschenswert, wenn man auf die Ankopplung einer Prozessfaser verzichten könnte.

Ein Schweißroboter, bei dem ein Laserstrahl innerhalb eines Roboterarmes über eine Reihe von internen Spiegeln zu einem den Laserstrahl fokussierenden Kopf geführt wird, ist aus der US-A-5 034 618, sowie aus der EP 0 440 002 B2 bekannt. Es werden in dieser letzten Schrift keine Aussagen dazu getroffen, wie der Laserstrahl von der Laserquelle zu einer notwendigerweise vorhandenen Einkoppelstelle am Roboterarm gelangt und wie er Eingekoppelt wird. Man kann annehmen, dass hier als Laserquelle ein CO₂-Laser angedacht ist, der, im Vergleich zu den in Lichtleitfasern geführten Laserstrahlen, von Festkörperlasern, Laserstrahlen mit einer sehr hohen Strahlqualität emittiert. Durch die Vorgänge in den Lichtleitfasern wird die Strahlform und die Strahlkaustik dermaßen verändert, dass aus einer nahezu Gaußschen Verteilung der Strahlintensität eine Top-Head-Verteilung gewonnen wird.

Es ist die Aufgabe der Erfindung, eine Vorrichtung zur 3-D-Bearbeitung eines Werkstückes mit Laserstrahl zu finden, die unter Nutzung eines Knickarm-Roboters und einer Zuführung des Laserstrahls über ein Lichtleitkabel arbeitet, ohne dass das Lichtteitkabel einer mechanischen Belastung unterliegt.

Die erfindungsgemäße Aufgabe wird mit einer Vorrichtung gemäβ Anspruch 1 gelöst.

Das Lichtleitkabel steht mit dem ortfesten Ende des Gelenkarmes so in Verbindung, dass der Laserstrahl durch den gesamten Gelenkarm geführt wird. Um den Laserstrahl mit gleichbleibender Strahlqualität durch den Gelenkarm führen zu können, ist das Ende des Lichtleitkabels, aus dem der Laserstrahl austritt, mit dem festen Ende des Gelenkarmes mittelbar über eine Justierbaugruppe verbunden. Die Justierbaugruppe umfasst eine Kollimationsoptik und mindestens zwei Justierspiegel, die jeweils mindestens um eine Rotationsachse schwenkbar und mindestens entlang einer Translationsachse verschiebbar sind, wobei die Rotationsachsen und die Translationsachsen jeweils senkrecht aufeinander stehen, sodass die Strahlachse des Laserstrahles mit der optischen Achse in Deckung gebracht werden kann. Indem die Strahlachse jeweils zur optischen Achse justierbar ist, können handelsübliche Steck- oder Schraubverbindungen verwendet werden, um das Ende des Lichtleitkabels mit dem Gelenkarm zu verbinden.

Vorteilhaft ist die Verbindung zwischen dem Lichtleitkabel und der Justierbaugruppe über einen am Lichtleitkabel vorhandenen Stecker und eine am Gehäuse der Justierbaugruppe vorgesehene Buchse, die gemeinsam einen Schnellverschluss bilden, hergestellt.

Da das Lichtleitkabel keiner mechanischen Belastung unterliegt, kann es vorteilhaft nur aus einem Faserlaser und einer Transportfaser oder auch nur einem faserlaser gebildet sein, womit keine die Strahlqualität verschlechternde Faser-Faser-Verbindung notwendig ist, um, wie üblich bei mechanischen Belastungen, zusätzlich eine Prozessfaser als Verschleißteil anzukoppeln.

Vorteilhaft umfasst die Justierbaugruppe zusätzlich einen Umlenkspiegel, der um die dritte Rotationsachse schwenkbar und die dritte Translationsachse verschiebbar, womit die Justierbaugruppe sechs Freiheitsgrade zur Justierung hat, und die Büchse am Gehäuse der Justierbaugruppe an beliebiger Stelle konzipiert sein kann. Vorteilhaft sind die Linsen der Bearbeitungsoptik und der Kollimationsoptik jeweils zueinander translatorisch bewegbar.

Durch eine Verschiebung der Linsen der Bearbeitungsoptik kann die Fokuslage auf unterschiedliche Entfernungen von der Bearbeitungsoptik eingestellt werden, was bei einem konstanten Abstand einer Werkstückauflage notwendig wird, um Werkstücke unterschiedlicher Dicke zu bearbeiten.

Durch die Verschiebung der Linsen der Kollimationsoptik kann deren Brennweite an die Divergenz des Laserstrahls angepasst werden, mit der der Laserstrahl das Lichtleitkabel verlässt.

Die Erfindung soll nachfolgend anhand von Ausführungsbeispielen unter Zuhilfenahme einer Zeichnung näher erläutert werden. Hierzu zeigt:
- Fig. 1: eine Prinzipskizze einer erfindungsgemäßen Vorrichtung gemäß eines ersten Ausführungsbeispiels
- Fig. 2: eine Prinzipskizze einer Justierbaugruppe einer erfindungsgemäßen Vorrichtung gemäß einem zweiten Ausführungsbeispiel

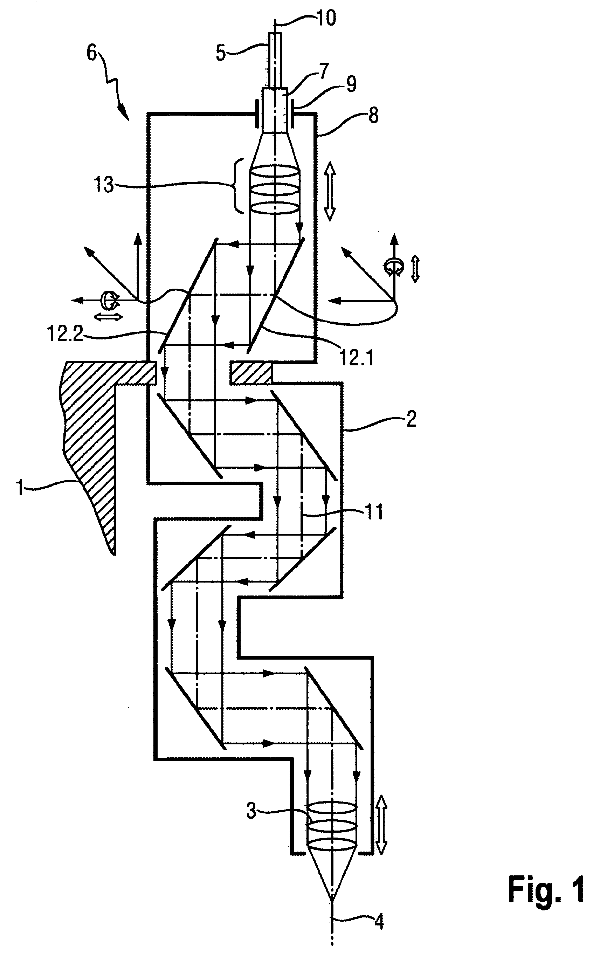

Die in Fig. 1 gezeigte Vorrichtung umfasst einen Knickarm-Roboter mit einem Robotergestell 1 und einem Gelenkarm 2 mit mehreren Achsen, an dessen freiem Ende eine Bearbeitungsoptik 3 vorhanden ist, die eine optische Achse 4 für den Strahlengang innerhalb des Gelenkarmes 2 definiert. Das andere Ende des Gelenkarmes 2 ist ortfest am Robotergestell 1 montiert.

Der Gelenkarm 2 ist hohl und besitzt über seine gesamte Länge eine freie Apertur von z. B. 30 mm. Innerhalb des Gelenkarmes 2 positionierte Spiegel lenken den Laserstrahl 11 im Gelenkarm 2 um, wobei die Distanz zwischen den Spiegeln bei der Bewegung des Gelenkarmes 2 immer gleich bleibt, so dass es nicht zu einer unerwünschten Schwankung des Strahldurchmessers kommt. Die optische Achse 4 wird über die Spiegel umgelenkt und befindet sich am festen Ende des Gelenkarmes 2 in einer von der Bewegung des Gelenkarmes 2 unabhängigen stabilen Raumlage in Richtung der ersten Achse des Gelenkarmes 2, gezählt vom festen Ende aus.

Mit dem ortsfesten Ende des Gelenkarmes 2 ist ein Ende eines Lichtleitkabels 5 mittelbar über eine Justierbaugruppe 6 verbunden. Diese Justierbaugruppe 6 ist so konzipiert, dass ein eintretender, vom Lichtleitkabel 5 kommender Laserstrahl 11 so justiert werden kann, dass dessen Strahlachse 10 mit der optischen Achse 4, wie sie am festen Ende des Gelenkarmes 2, in Richtung einer ersten Achse des Gelenkarmes 2, stabil im Raum liegt, in Deckung gebracht wird, also auf diese ausgerichtet wird.

Die Verbindung zwischen dem Lichtleitkabel 5 und der Justierbaugruppe 6 ist über einen am Lichtleitkabel 5 vorhandenen Stecker 7 und einer am Gehäuse 8 der Justierbaugruppe 6 vorgesehenen Buchse 9, die gemeinsam bevorzugt einen Schnellverschluss bilden, hergestellt. Es werden keine Ansprüche an die mechanischen Toleranzen der Verbindung gestellt, da nachfolgend die Justierung erfolgt.

Indem das Ende des Lichtleitkabels 5 über starre Verbindungen mittelbar mit dem ortsfesten Ende des Gelenkarmes 2 verbunden ist, bleibt das Lichtleitkabel 5 in Ruhe, unabhängig von der Bewegung des Gelenkarmes 2, das heißt es wird nicht mitbewegt und damit auch dynamisch nicht belastet.

Dadurch könnte auch ein Lichtleitkabel 5 verwendet werden, weiches nur aus einem Faserlaser oder aus einem Faserlaser und einer Transportfaser gebildet wird. D auf eine Ankopplung einer Prozessfaser, die als Verschleißteil auswechselbar ist, könnte verzichtet werden, da das Lichtleitkabel 5 keiner mechanischen Belastung und damit auch keinem wesentlichen Verschleiß unterliegt.

Das Lichtleitkabel 5 kann auch nur der Übertragung des Laserstrahles 11 von einer entfernt angeordneten Laserquelle hin zum Knick-Arm-Roboter dienen.

Die Lage der Strahlachse 10 eines aus dem Ende des Lichtleitkabels 5 austretenden Laserstrahles 11 hängt stark von der Beschaffenheit des Endes des Lichtleitkabels 5 sowie der durch den Stecker 7 und die Buchse 9 gebildeten Verbindung ab. Die hiermit zwangsläufig entstehende Lageabweichung der Strahlachse 10 zur optischen Achse 4 in x-, y- und z-Richtung sowie deren Verkippung zur optischen Achse 4 führen dazu, dass der Laserstrahls 11, wenn er direkt in den Gelenkarm 2 eingekoppelt werden würde, nicht konzentrisch zur optischen Achse 4 durch den Gelenkarm 2 geführt werden würde.

Über die lange Weglänge innerhalb des Gelenkarmes 2 und die mehrfachen Umlenkungen an den im Gelenkarm 2 integrierten Spiegeln würden sich die Fehler summieren. Es könnte somit passieren, dass Teile des Laserstrahls 11 nicht mehr auf die integrierten Spiegel auftreffen und von anderen Bauteilen des Gelenkarmes 2, auf die sie auftreffen, absorbiert oder reflektiert werden. Die ungewollte Adsorption würde zu einer Erwärmung und folglich zu einer Beschädigung des Gelenkarmes 2 führen. Die ungewollte Reflexion würde zu einer Verschlechterung der Strahlqualität des Laserstrahls 11 führen.

Um den Laserstrahl 11, ohne höhere Ansprüche an die Verbindung des Endes des Lichtleitkabels 5 zu stellen, trotzdem mit gleichbleibender Strahlqualität durch den Gelenkarm 2 führen zu können, wird die Strahlachse 10, bevor der Laserstrahl 11 in den Gelenkarm 2 geleitet wird, mittels der Justierbaugruppe 6 auf die optische Achse 4 ausgerichtet.

Die Justierbaugruppe 6 besteht aus zwei Justierspiegeln 12.1, 12.2 und einer Kollimationsoptik 13. Die Kollimationsoptik 13 ist dem Ende des Lichtleitkabels 5 in Strahlungsrichtung optisch unmittelbar nachgeordnet, gefolgt von den beiden Justierspiegeln 12.1, 12.2, denen dann im Strahlengang die integrierten Spiegel des Gelenkarmes 2 bis hin zur Bearbeitungsoptik 3 folgen.

Die Kollimationsoptik 13 ist so ausgelegt, dass sie den aus dem Ende des Lichtleitkabels 5 austretenden divergenten Laserstrahl 11 zum einen kollimiert, damit der Laserstrahl 11 als paralleles Strahlenbündel mit einem konstanten Strahldurchmesser durch den Gelenkarm 2 geführt werden kann, und zum anderen den Laserstrahl 11 so aufweitet, dass die Strahlungsdichte über den Strahlquerschnitt an die Belastbarkeit der integrierten Spiegel angepasst wird, um deren Überhitzung und eine sich daraus ergebende Deformation zu vermeiden.

Der kollimierte Laserstrahl 11 wird dann über die beiden Justierspiegel 12.1, 12.2 umgelenkt, die jeweils wenigstens um eine Rotationsachse und eine Translationsachse verstellbar sind.

Dabei stehen die beiden notwendigen Rotationsachsen und die beiden notwendigen Translationsachsen jeweils senkrecht aufeinander. Über eine entsprechende Verschiebung und Verdrehung der Justierspiegel 12.1, 12.2 wird die Strahlachse 10 in Deckung mit der optischen Achse 4 gebracht.

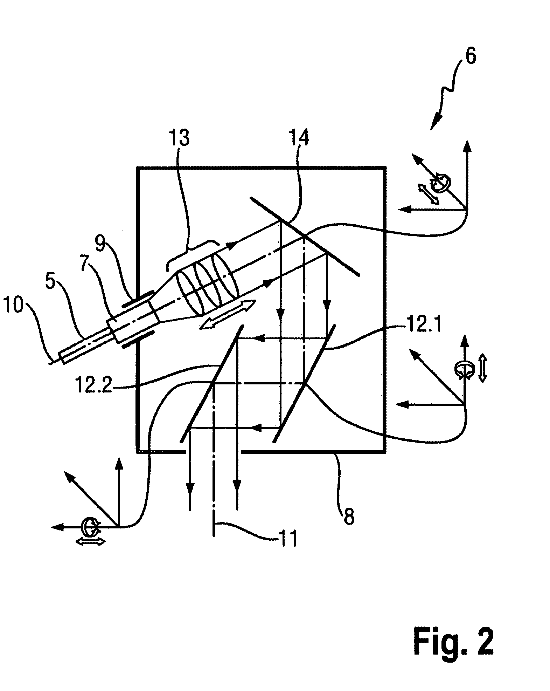

Gemäß einem zweiten Ausführungsbeispiel, gezeigt in Fig. 2, weist die Justierbaugruppe zusätzlich zu den beiden Justierspiegeln 12.1, 12.2 einen Umlenkspiegel 14 auf. Damit muss die Buchse 9 nicht, wie im ersten Ausführungsbeispiel, in Richtung der ersten Achse des Roboters am Gehäuse 8 der Justierbaugruppe 6 angebracht sein, sondern kann an beliebiger Stelle positioniert sein. Der Umlenkspiegel 14 dient dann der Umlenkung des aus dem Ende des Lichtleitkabels 5 austretenden Laserstrahls 11 auf den ersten Justierspiegel 12.1. Mit den beiden Justierspiegeln 12.1 und 12.2 und dem Umlenkspiegel 14 hat die Justierbaugruppe 6 sechs Freiheitsgrade, um die Strahlachse 10 auf die optische Achse 4 auszurichten.

Am Austritt aus dem Roboter, das heißt am freien Ende des Gelenkarmes 2 wird durch eine kapazitive bzw. induktive Abstandssensorik und durch gezielte Verarbeitung des Sensorsignals der Abstand zwischen der Werkstückoberfläche und dem freien Ende des Gelenkarmes 2, das als Bearbeitungskopf oder Schneiddüse ausgebildet ist, geregelt.

Das durch eine Auswerteeinheit verarbeitete Signal wird genutzt, um durch eine zeitlich festgelegte Übergabe an die Robotersteuerung eine Veränderung der Roboterposition vorzunehmen.

Die Regelung erfolgt nicht über eine am Roboterkopf angebrachte externe Achse, die die Gesamtkonstruktion nur erschwert, sondern direkt über den Roboter. Um eine schlanke Regelung zu erzielen und das Überschwingen zu vermeiden, sieht die Regelungsstrategie eine Teilung des Bereiches zwischen Bearbeitungskopf/Schneiddüse und Werkstückoberfläche in Fern- und Nahfeld vor. Im Fernfeldbereich erfolgt die Regelung bezogen auf den Abstand zwischen Werkstück und Bearbeitungskopf/Schneiddüse, während im Nahfeldbereich die Differenz zwischen Bearbeitungskopf/Schneiddüse und einzuhaltende Abstand (beispielsweise 0,2 - 2 mm) prozentual als Stellgröße angenommen wird.

### Bezugszeichenliste

- 1: Robotergestell
- 2: Gelenkarm
- 3: Bearbeitungsoptik
- 4: optische Achse
- 5: Lichtleitkabel
- 6: Justierbaugruppe
- 7: Stecker
- 8: Gehäuse
- 9: Buchse
- 10: Strahlachse
- 11: Laserstrahl
- 12: Justierspiegel
- 13: Kollimationsoptik
- 14: Umlenkspiegel

## Patentansprüche

1. Vorrichtung zur hochdynamischen 3-D-Bearbeitung eines Werkstückes mit Laserstrahl bestehend aus einem Knickarm-Roboter mit einem Robotergestell (1) und einem Gelenkarm (2), dessen ortsfestes Ende am Robotergestell (1) befestigt ist und an dessen freiem Ende eine Bearbeitungsoptik (3) vorhanden ist, die eine optische Achse (4) definiert, sowie einem Lichtleitkabel (5), das mit dem ortsfesten Ende des Gelenkarmes (2) in Verbindung steht, um einen Laserstrahl (11) mit einer Strahlachse (10) in den Gelenkarm (2) einkoppeln zu können, wobei
das Lichtleitkabel (5) mit dem ortsfesten Ende des Gelenkarmes (2) mittelbar über eine Justierbaugruppe (6) in Verbindung steht und die Justierbaugruppe (6) eine Kollimationsoptik (13) und mindestens zwei Justierspiegel (12.1, 12.2) umfasst, die jeweils mindestens um eine Rotationsachse schwenkbar und mindestens entlang einer Translationsachse verschiebbar sind, wobei die Rotationsachsen und die Translationsachsen jeweils senkrecht aufeinander stehen, sodass die Strahlachse (10) mit der optischen Achse (4) in Deckung gebracht werden kann.

2. Vorrichtung nach Anspruch 1, **dadurch gekennzeichnet,**
**dass** die Verbindung zwischen dem Lichtleitkabel (5) und der Justierbaugruppe (6) über einen am Lichtleitkabel (5) vorhandenen Stecker (7) und eine am Gehäuse (8) der Justierbaugruppe (6) vorgesehene Buchse (9), die gemeinsam einen Schnellverschluss bilden, hergestellt ist.

3. Vorrichtung nach Anspruch 1, **dadurch gekennzeichnet,**
**dass** das Lichtleitkabel (5) aus einem Faserlaser und einer Transportfaser gebildet ist.

4. Vorrichtung nach Anspruch 1, **dadurch gekennzeichnet,**
**dass** die Justierbaugruppe (6) zusätzlich einen Umlenkspiegel (14) umfasst, der um die dritte Rotationsachse schwenkbar und die dritte Translationsachse verschiebbar ist.

5. Vorrichtung nach Anspruch 1, **dadurch gekennzeichnet,**
**dass** die Linsen der Bearbeitungsoptik (3) und der Kollimationsoptik (13) jeweils zueinander translatorisch bewegbar sind.

## Claims

1. A device for highly dynamic 3D machining of a workpiece with a laser beam, said device comprising a buckling-arm robot with a robot frame (1) and an articulated arm (2), the stationary end of which arm (2) is attached to the robot frame (1) and on the free end of which arm (2) a machining lens system (3) is disposed, which lens system (3) defines an optical axis (4), and a fibre optic cable (5) which is connected to the stationary end of the articulated arm (2) so as to be able to couple a laser beam (11) with a beam axis (10) into the articulated arm (2), said fibre optic cable (5) being indirectly connected via an alignment unit (6) to the stationary end of the articulated arm (2) and the alignment unit (6) comprising a collimating lens system (13) and at least two alignment mirrors (12.1, 12.2), each of which can swivel about at least one axis of rotation and move along at least one axis of translation, with the axes of rotation and the axes of translation being at right angles to each other, so that the beam axis (10) can be made to coincide with the optical axis (4).

2. Device according to claim 1, **characterised in that** the connection between the fibre optic cable (5) and the alignment unit (6) is implemented via a plug (7) that is disposed on the fibre optic cable (5) and a jack (9) that is disposed on the housing (8) of the alignment unit (6), which plug (7) and jack (9) together form a rapid-action lock.

3. Device according to claim 1, **characterised in that** the fibre optic cable (5) comprises a fibre laser and a transport fibre.

4. Device according to claim 1, **characterised in that** the alignment unit (6) also has a redirecting mirror (14) which can be swiveled about the third axis of rotation and moved along the third axis of translation.

5. Device according to claim 1, **characterised in that** the lenses of the machining lens system (3) and of the collimating lens system (13) can be moved translationally relative to one another.

## Revendications

1. Dispositif d'usinage en 3D hautement dynamique d'une pièce à usiner au moyen d'un faisceau laser, ledit dispositif comprenant un robot à bras articulé avec un bâti (1) et un bras articulé (2), l'extrémité fixe dudit bras (2) étant attachée au bâti (1) du robot et l'extrémité libre dudit bras (2) présentant un système optique d'usinage (3), ce système optique (3) définissant un axe optique (4), et avec un câble à fibres optiques (5) relié à ladite extrémité fixe du bras articulé (2) de manière à pouvoir coupler dans ledit bras articulé (2) un faisceau laser (11) qui présente un axe de faisceau (10), ledit câble à fibres optiques (5) étant relié indirectement à l'extrémité fixe dudit bras articulé (2) au moyen d'un ensemble d'alignement (6) qui comprend un système optique de collimation (13) et au moins deux miroirs d'alignement (12.1, 12.2), dont chacun peut être pivoté autour d'au moins un axe de rotation et déplacé selon au moins un axe de translation, lesdits axes de rotation et de translation formant un angle droit entre eux, de sorte que l'on puisse faire coïncider l'axe de faisceau (10) avec l'axe optique (4).

2. Dispositif selon la revendication 1, **caractérisé en ce que** la liaison entre le câble à fibres optiques (5) et l'ensemble d'alignement (6) est réalisée au moyen d'une prise mâle (7) disposée sur ledit câble à fibres optiques (5) et d'une prise femelle (9) disposée sur le boîtier (8) de l'ensemble d'alignement (6), lesdites prises mâle (7) et femelle (9) réalisant entre eux une fermeture rapide.

3. Dispositif selon la revendication 1, **caractérisé en ce que** ledit câble à fibres optiques (5) comprend un laser à fibres et une fibre de transport.

4. Dispositif selon la revendication 1, **caractérisé en ce que** ledit ensemble d'alignement (6) comprend en plus un miroir de renvoi (14) monté de manière pivotante autour du troisième axe de rotation et déplaçable selon le troisième axe de translation.

5. Dispositif selon la revendication 1, **caractérisé en ce que** les lentilles du système optique d'usinage (3) et du système optique de collimation (13) sont déplaçable en translation l'un par rapport à l'autre.
